# EUROPEAN PATENT APPLICATION

(11) **EP 2 270 333 A1**
(43) Date of publication of application: **05.01.2011**
(21) Application number: 09008477.3
(22) Date of filing: 29.06.2009
(51) Int. Cl.: F03D 11/02, F16H 1/28, F16H 57/08

(54) **Planetary gear transmisssion unit with planet shaft locking mechanism**

(71) Applicant: Hansen Transmissions International, Naamloze Vennotschap, 2650 Edegem (BE)
(72) Inventor: Goesaert, Ben, 2060, Antwerpen (BE); Loenders, Jo, 2490, Balen (BE); Bogaert, Roger, 9200, Dendermonde (BE); Lurquin, Johan, 2360, Oud-Turnhout (BE); Smook, Warren, 3040, Huldenberg (BE)
(74) Representative: Donné, Eddy

(57) **Abstract**

The present invention provides a planetary gear transmission unit (20) comprising a planet carrier (14) which supports and locates circumferential spaced pairs of planet gears (12), and at least one planet shaft (13). The planetary gear transmission unit (20) furthermore comprises a planet shaft locking mechanism (18) between the at least one planet shaft (13) and the planet carrier (14) for preventing the at least one planet shaft (13) from rotating around its own axis. An advantage of a planetary gear transmission unit (20) according to embodiments of the invention is that rotation of the planet shafts (13) relative to his bore in the planet carrier (14) is prevented. The invention results in a free of wear contact between planet shaft (13) and planet carrier (14), thereby allowing all degrees of freedom of the planet shaft (13), without disturbing the load distribution between the planet gears (12) of a pair on one planet shaft (13).

## Description

### Technical field of the invention

The present invention relates to a gear unit for wind turbines. More particularly, the present invention relates to a planetary gear transmission unit with a planet shaft locking mechanism, to a gearbox comprising such a planetary gear transmission unit and to a wind turbine comprising such a gearbox.

### Background of the invention

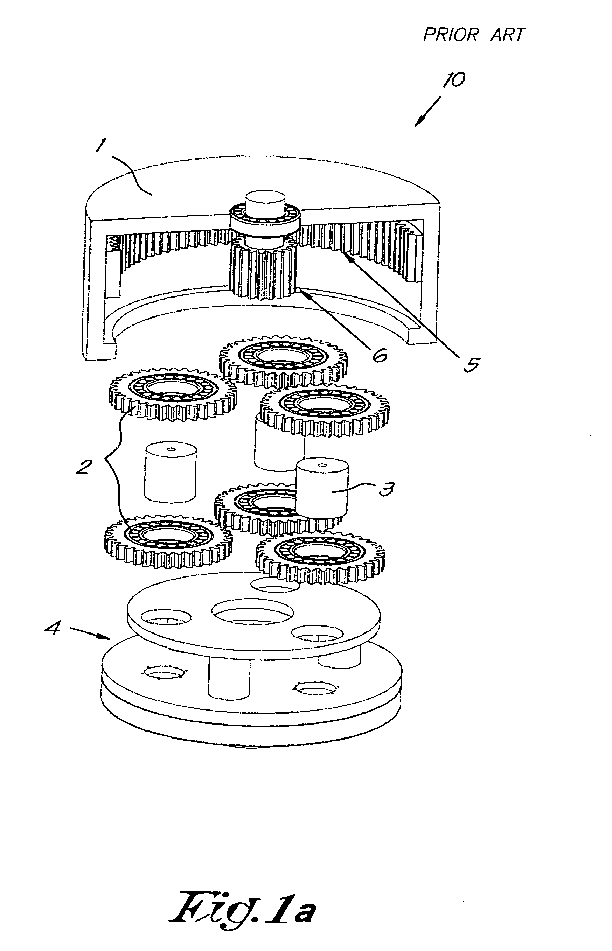

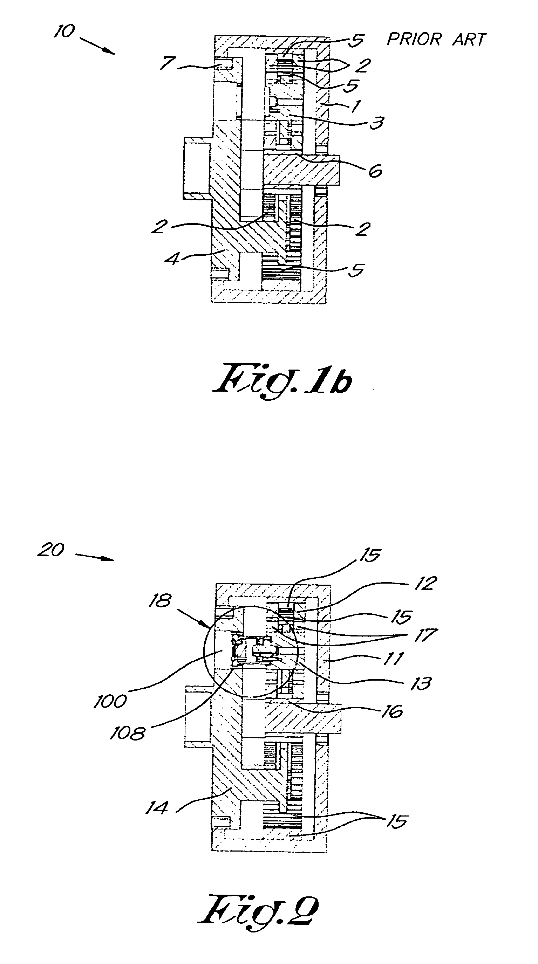

Gearboxes for wind turbines may comprise at least one planetary gear transmission unit comprising a planet carrier, planet gears, a sun gear and a ring gear.Fig. 1a and Fig. 1 b schematically illustrate a planetary gear transmission unit 10 according to the prior art. The planetary gear transmission unit 10 comprises a housing 1 in which a plurality of planet gears 2, planet shafts 3 and a planet carrier 4 are located. The planetary gear transmission unit 10 furthermore comprises a ring gear 5 and a sun gear 6. The planet carrier 4 is connected to the rotor hub (not shown) of the wind turbine and is supported rotatably with respect to the housing 1 by bearings 7 (see Fig. 1 b).

Gearbox designs are known in which the bearing supporting the planet carrier 4 also serves as a main bearing for supporting the rotor hub to which the planet carrier 4 is connected. However, using one main bearing to support the rotor hub as well as the planet carrier 4 is less rigid than in the more classical designs whereby the rotor hub and the planet carrier 4 are supported by separate bearings and/or the rotor hub is supported by multiple bearings. When using one main bearing for supporting both the rotor hub and the planet carrier 4, misalignments may occur between the planet carrier 4 and the ring gear 5 which augment the risk of causing damage to the planet gears 2.

A known solution to this problem is to mount the planet shafts 3 to the planet carrier 4 in a more or less flexible way, as is known in the prior art. However, since in this case the planet shafts 3 are connected to the planet carrier 4 allowing its movement according to certain modes, under particular circumstances, e.g. under particular loads, the planet shafts 3 may rotate around their own axis with respect to the planet carrier 4. Such a rotation of the planet shafts 3 during operation of the gearbox can cause damages. As a consequence, the life time of the planetary gear unit 10 may be decreased.

### Summary of the invention

It is an object of the present invention to provide a planetary gear transmission unit which does not show one or more of the above described disadvantages and possible other disadvantages.

It is also an object of the present invention to provide a planetary gear transmission unit with a planet shaft locking mechanism, to a gearbox comprising such a planetary gear transmission unit and to a wind turbine comprising such a gearbox.

The present invention relates to a planetary type gear transmission unit in which planet gears on a planet carrier are mounted between a sun gear and a ring gear for mutual interaction, wherein the planet carrier is provided with planet shafts distributed uniformly around the planet carrier's axis, each planet shaft supporting in a rotatable manner a pair of planet gears by means of planet bearings.

In one aspect, the present invention provides a planetary gear transmission unit comprising a planet shaft locking mechanism between at least one planet shaft and the planet carrier for preventing the at least one planet shaft from rotating around its own axis.

According to the invention a planetary gear transmission unit having an afore-mentioned planet shaft locking mechanism will prevent said at least one planet shaft from rotating around its own axis with respect to the planet carrier without restricting other movements of said planet shaft with respect to the planet carrier in order to avoid further restriction of the degrees of freedom of the planet shaft compared to a similar assembly of the planet shaft without such locking mechanism for preventing said rotation.

An advantage of a planetary gear transmission unit according to said embodiment in accordance with the invention is that, because rotation of a planet shaft around its own axis with respect to the planet carrier is prevented, the chance to cause damage related to such a rotation during operation of the planetary gear transmission unit is reduced. As a consequence, lifetime of the planetary gear transmission unit may be increased.

Hence, the invention results in a free of wear contact between planet shaft and planet carrier as far as a rotation of the planet shaft around its axis with respect to the planet carrier is concerned, thereby possibly allowing any other possible movement of the planet shaft with respect to the planet carrier for example in order to have still a maximum degree of freedom of the planet shaft with respect to the planet carrier for other movements and without disturbing the load distribution between the planet gears of a pair on one planet shaft.

According to a preferred embodiment of a planetary gear transmission unit in accordance with the invention, the planet shaft locking mechanism is such that each planet shaft of the planet carriers is prevented from rotating around its axis with respect to the planet carrier, whereas other movements of the planet shaft with respect to the planet carrier are not hindered considerably.

According to an embodiment of a planetary gear transmission unit in accordance with the invention, the planet shaft locking mechanism may comprise a gear coupling, which may also be referred to as a barrel gear coupling.

The gear coupling may comprise:
- a first and second gear coupling part, the first gear coupling part is intended for being connected to the planet carrier and the second gear coupling part is intended for being connected to the planet shaft,
- an intermediate part which may be for example a barrel or a sleeve, for preventing a rotation of the first gear coupling part with respect to the second gear coupling part, and
- a mounting flange attached to the first gear coupling part.

The first and second gear coupling parts may also be referred to as hubs.

According to another embodiment of a planetary gear transmission unit in accordance with the invention, the first and second gear coupling parts may be hubs with external gear teeth. In that case, the intermediate part may comprise two internal toothings complementary to the aforementioned external gear teeth on the coupling parts.

According to other embodiments of a planetary gear transmission unit in accordance with the invention, the first and second gear coupling parts may be hubs with internal gear teeth. In that case, instead, the intermediate part may be a shaft with external complementary gear teeth which may be used for connecting the first and second gear coupling parts.

According to embodiments of a planetary gear transmission unit in accordance with the invention, the gear coupling may furthermore comprise a fail safe mechanism, which may also be referred to as a so-called weakest link.

The fail safe mechanism may, according to embodiments of the invention, be a torque limiting pin, which may e.g. be a through hardened pin.

The gear coupling may furthermore comprise a lubrication mechanism.

According to another embodiment of a planetary gear transmission unit in accordance with the invention, the planet shaft locking mechanism may comprise a double pin coupling.

The double pin coupling may comprise three parts, a first connecting part for connecting the double pin coupling to the planet carrier, a second connecting part for connecting the double pin coupling to the planet shaft and an intermediate part in between the first and second connecting part.

The double pin coupling may, according to embodiments of the invention, furthermore comprise a hollow pin for connecting the second connecting part to the intermediate part.

According to still further embodiments in accordance with the invention, the double pin coupling may furthermore comprise a spring in the second connecting part. This spring is for preventing movement of the intermediate part between the first connecting part and the second connecting part during operation of the planetary gear transmission unit.

In a further aspect of the invention, a gearbox is provided comprising at least one planetary gear transmission unit according to embodiments of the present invention.

In still a further aspect of the invention, a wind turbine is provided comprising a gearbox comprising at least one planetary gear transmission unit according to embodiments of the present invention.

The above and other characteristics, features and advantages of the present invention will become apparent from the following detailed description, taken in conjunction with the accompanying drawings, which illustrate, by way of example; the principles of the invention. This description is given for the sake of example only, without limiting the scope of the invention. The reference figures quoted below refer to the attached drawings.

### Brief description of the drawings

In the different figures same reference signs refer to same or analogous elements.
Fig.1a and Fig. 1b schematically illustrate a planetary gear transmission unit according to the prior art.
Fig.2 illustrates a planetary gear transmission unit comprising a planet shaft locking mechanism according to a first embodiment of the present invention.
Fig.3 to Fig.6 illustrate details of a planet shaft locking mechanism according to the first embodiment of the present invention.
Fig. 7 illustrates the mounting of a planet shaft locking mechanism according to the first embodiment of the invention to a planet shaft.
Fig.8 illustrates a planetary gear transmission unit comprising a planet shaft locking mechanism according to a second embodiment of the present invention.
Fig. 9 to 12 illustrate details of a planet shaft locking mechanism according to the second embodiment of the present invention.

### Description of illustrative embodiments

The present invention will be described with respect to particular embodiments and with reference to certain non-limiting drawings. It has to be understood that the invention is not limited thereto but is only limited by the claims. For illustrative purposes, the size of some of the elements in the drawings may be exaggerated and not drawn on scale.

Terms such as "comprising" and "coupled" are not to be interpreted as limiting the invention in any way. The term "comprising", used in the claims, should not be interpreted as being restricted to the means listed thereafter; it does not exclude other elements or steps. Similarly, it is to be noticed that the term "coupled", also used in the claims, should not be interpreted as being restricted to direct connections only.

While some embodiments described herein include some but not other features included in other embodiments, combinations of features of different embodiments are meant to be within the scope of the invention, and from different embodiments, as would be understood by those skilled in the art. For example, in the following claims, any of the claimed embodiments can be used in any combination.

The present invention relates to a planetary type gear transmission unit in which planet gears on a planet carrier are mounted between a sun gear and a ring gear for mutual interaction, wherein the planet carrier is provided with planet shafts distributed uniformly around the planet carrier's axis, each planet shaft supporting in a rotatable manner a pair of planet gears by means of planet bearings.

The present invention furthermore relates to a gearbox comprising such a planetary type gear transmission unit and to a wind turbine comprising such a gearbox.

In one aspect, the present invention provides such a planetary gear transmission unit which comprises a planet shaft locking mechanism between at least one planet shaft and the planet carrier for preventing the at least one planet shaft from rotating around its own axis with respect to the planet carrier.

On the one hand, the planet shaft locking mechanism should be flexible in a way that it allows required movement between the planet shaft and the planet carrier. On the other hand, the planet shaft locking mechanism should be stiff in a way that it prevents rotation of the planet shaft around a planet shaft axis in reference to the planet carrier. As a result, when the planetary gear transmission unit according to embodiments of the invention is in operation, tension or stress created by a load in the planet carrier near the planet shaft locking mechanism can be kept low.

In other words, the planet shaft locking mechanism according to embodiments of the present invention will prevent a planet shaft from rotating around its own axis with respect to the planet carrier without restricting other movements of said planet shaft with respect to the planet carrier in order to avoid further restriction of the degrees of freedom of the planet shaft compared to a similar assembly of the planet shaft without such locking mechanism for preventing said rotation.

An advantage of a planetary gear transmission unit according to embodiments of the invention is that, since a rotation of a planet shaft, or, in extension, of all the planet shafts is prevented by the locking mechanism, the chance damage to a planet shaft is caused during operation of the planetary gear transmission unit is reduced. As a consequence, the lifetime of the planetary gear transmission unit may be increased.

Hence, the invention results in a free of wear contact between planet shaft and planet carrier as far as a rotation of the planet shaft around its axis with respect to the planet carrier is concerned, thereby possibly allowing any other possible movement of the planet shaft with respect to the planet carrier for example in order to have still a maximum degree of freedom of the planet shaft with respect to the planet carrier for other movements and without disturbing the load distribution between the planet gears of a pair on one planet shaft.

According to embodiments of the invention, the planet shaft locking mechanism may be, for example any non-switchable coupling, such as a gear coupling, a double pin coupling, a cross slot coupling, a jaw coupling or a metal disc coupling.

However the invention is not limited to embodiments having such non-switchable couplings.

Although non-switchable couplings are known and designed for transferring rotational energy between two shafts or between a shaft and a rotational component, e.g. a gear, it is not straightforward to choose a suitable non-switchable coupling for application in a planetary gear transmission unit for the above described purpose.

Indeed, according to the present invention, the planet shaft locking mechanism has to be suitable for transferring torque. It was surprisingly found that the non-switchable couplings as described above are suitable for being used for the purpose of the invention.

According to a first embodiment of the invention here described in detail, the planet shaft locking mechanism may comprise a gear coupling which may also be referred to as barrel gear coupling.

Fig. 2 shows a planetary gear transmission unit 20 according to the first embodiment. The planetary gear transmission unit 20 comprises a housing 11 in which a plurality of planet gears 12, planet shafts 13 and a planet carrier 14 are located. The planetary gear transmission unit 20 furthermore comprises a ring gear 15 and a sun gear 16. The planet gears 12 are rotatably supported on the planet shafts 13 by means of planet gear bearings 17. According to embodiments of the present invention, the planet gear bearings 17 may, for example, be taper roller bearings.

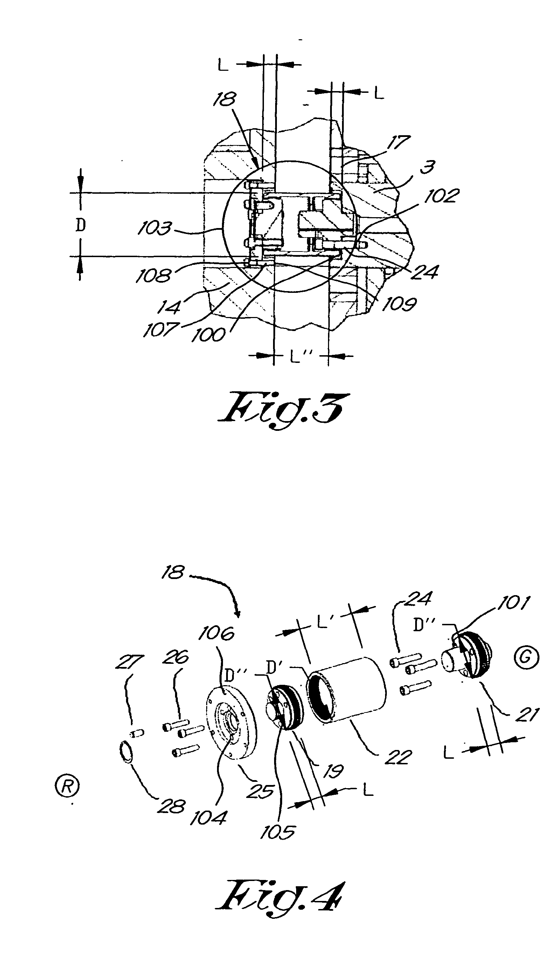

According to the present embodiment the planetary gear transmission unit 20 furthermore comprises a planet shaft locking mechanism 18 in the form of a gear coupling, which may also be referred to as barrel gear coupling, the locking mechanism 18 preventing the rotation of a planet shaft 13 with respect to the planet carrier 14. The locking mechanism 18 is provided in between the planet shaft 13 and the planet carrier 14 (see Fig. 3).

The gear coupling 18, which is schematically illustrated in detail in Fig. 4 to Fig. 6, comprises a first gear coupling part 19 and a second gear coupling part 21. The first and second gear coupling part 19, 21 may also be referred to as hubs 19, 21. According to the embodiment illustrated in Fig. 4, the first and second gear coupling parts 19, 21 may have external gear teeth. However, according to other embodiments which are not illustrated in the drawings, the first and second gear coupling parts 19, 21 may also have internal gear teeth.

When mounted in the planetary gear transmission unit 20 between the planet shaft 13 and the planet carrier 14 the gear coupling 18 is positioned such that the first gear coupling part 19 is closest to a rotor side of the planetary gear transmission unit 20 and the second gear coupling part 21 is closest to a generator side of the planetary gear transmission unit 20. With rotor side and generator side is respectively meant the side of the planetary gear transmission unit 20 to which the rotor is attached and the side of the planetary gear transmission unit 20 to which the generator is attached, in Fig. 4 indicated with respectively R and G. The first gear coupling part 19 is intended for being connected to the planet carrier 14 and the second gear coupling part 21 is intended for being connected to the planet shaft 13.

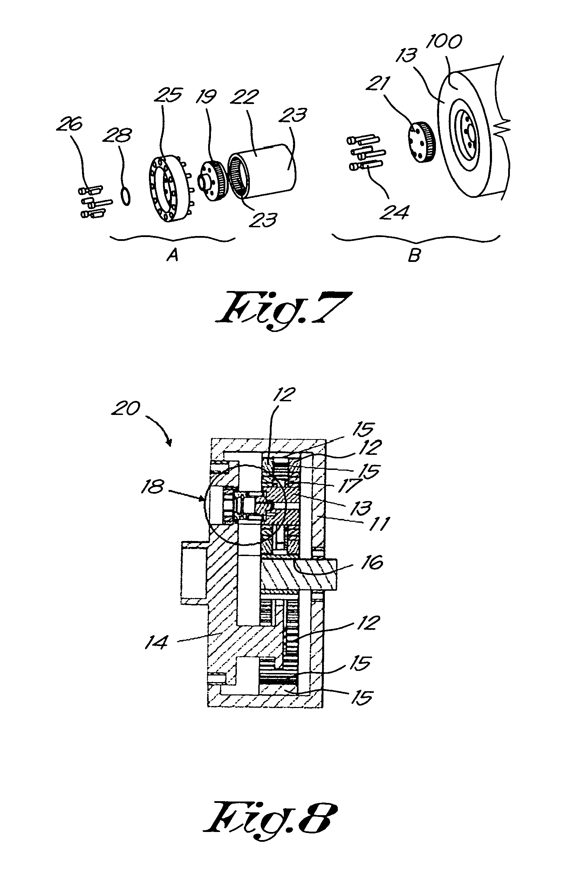

The first and second gear coupling parts 19, 21 are prevented from rotating with respect to one another by means of an intermediate part which is in this case sleeve 22, which may also be referred to as a barrel. The sleeve 22 may, according to the present embodiment, comprise two internal toothings 23 (see Fig. 7), one at each end of the sleeve 22, said internal toothings 23 being complementary to external gear teeth provided at the corresponding coupling parts 19 and 21. In that case, the sleeve 22 is during assembly slid over both the external gear teeth of the coupling parts 19 and 21 for preventing the rotation of both parts with respect to one another.

According to other embodiments in which the first and second gear coupling part 19, 21 have internal gear teeth, these parts 19, 21 may be prevented from rotating with respect to one another by means of an intermediate part in the form of a shaft with complementary external toothing instead of by means of a sleeve 22, which shaft is in that case slid in the internal toothings of the coupling parts 19 and 21,(not shown in the drawings).

It is clear that in such a way the intermediate part 22, for as far as its torsional stiffness is sufficiently high, is preventing the rotation of the first coupling part 19 with respect to the second coupling part 21.

However, small axial and possibly radial movements as well as other small rotational movements of the intermediate part 22 with respect to the first coupling part 19 and the second coupling part 21 are still possible, since the intermediate part 22 is in slidable connection with said coupling parts 19 and 21.

Preferably, movement of the intermediate part 22 in an axial direction is limited and it is preferably less than the smallest length L in axial direction of the external teeth of the gear coupling parts 19 and 21.

Axial movement of the locking mechanism 18 can be easily obtained when it is positioned between the axial end face 100 of a planet shaft 13 and the remaining driving part of the planet carrier 14.

Indeed, by choosing the length L' of the intermediate part 22 corresponding to the distance L" between said planet shaft end face 100 and the planet carrier 14, the intermediate part 22 can be easily axially located.

Furthermore, the second gear coupling part 21 may be provided with holes 101 for attaching it to the axial end face 100 of the planet shaft 13 by means of bolts 24.

Hereby, said axial end face 100 of the planet shaft 13 may be provided with corresponding threaded holes 102.

In order to simplify the assembly, the planet carrier 14 may be provided with holes 103 having an internal diameter D which is larger than or at least equal to the external diameter D' of the sleeve 22 and/or the diameter D" of a gear coupling parts 19 or 21, the holes 103 being aligned with the planet shafts 13 centre positions.

In that way the parts of the locking mechanism 18, i.e. the sleeve or shaft 22 and corresponding gear coupling parts 19 and 21, can be easily introduced through the holes 103 in the planet carrier 14 during assembly.

For connecting or fixing the first gear coupling part 19 to the planet carrier 14 preferably a mounting flange 25 is provided, having an external diameter E which is bigger than the internal diameter D of the holes 103 of the planet carrier 14.

Said mounting flange 25 is near its centre provided with holes 104 at positions corresponding to threaded holes 105 in the first gear coupling part 19 for fixedly connecting the mounting flange 25 to the first gear coupling part 19 by means of bolts 26.

Furthermore, the mounting flange 25 is near its outer border also provided with holes 106 corresponding to threaded holes 107 in the planet carrier 14 for connecting the mounting flange 25 to the planet carrier 14 by means of bolts 108.

The threaded holes 107 are therefore positioned around the holes 103, preferably in the side of the planet carrier 14 which is directed to the rotor hub, in particular on a flange part 109 forming the holes 3 in the planet carrier 14.

The different steps of mounting the gear coupling 18 into the planetary gear transmission unit 20 will be described later with respect to Fig. 7.

The gear coupling 18 according to the first embodiment of the invention allows axial, radial and small angular movement of the corresponding planet shaft 13 with respect to the planet carrier 14, but prevents large angular movement of the planet shaft 13 around its axis with respect to said planet carrier 14. Preventing large angular movement of the planet shaft 13 around its axis with respect to the planet carrier 14 is caused by torsional stiffness of the gear coupling 18.

According to embodiments of the invention, the gear coupling 18 may furthermore comprise a fail safe mechanism, also referred to as a so-called weakest link. The weakest link may, for example, be a torque limiting pin which, according to the present embodiment, may be in the form of a through hardened pin 27 (see Fig. 4 to Fig. 6). The weakest link 27 may be provided as a safety measure. If a limit tension or stress created by said torque is surpassed, then the weakest link 27 will break and not another, more important part of the planetary gear transmission unit 20. Furthermore, when the pin 27 fails the debris is kept inside the sleeve 22 to prevent damage to other components of the planetary gear transmission unit 20. Breaking of the weakest link 27 results in a clean cut. After breaking of the weakest link 27, the gear coupling part 21 at the generator side (G), the sleeve 22 and the gear coupling part 19 at the rotor side (R) remain connected to the planet shaft 13 and will further rotate. Possibly, there will be, however, relative movement between the gear coupling part 19 at the rotor side (R) and the mounting flange 25 during a planet shaft rotation around its axis. Furthermore, a circlips 28 is provided for keeping the gear coupling part 19 at the rotor side (R) in place in order to prevent it from falling when the weakest link 27 breaks.

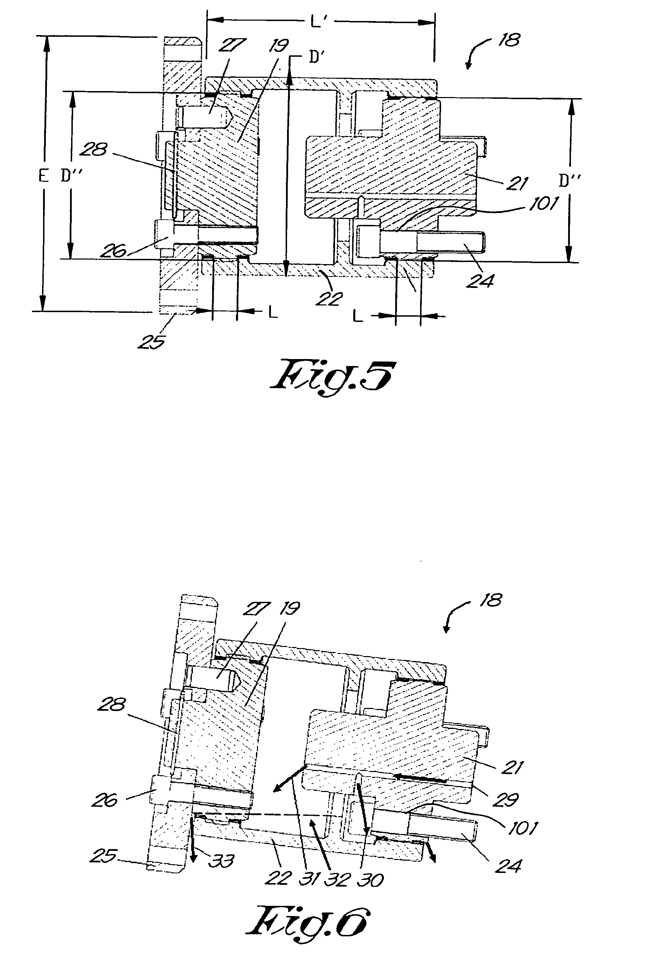

The gear coupling 18 of this first embodiment of a planetary gear transmission unit in accordance with the present invention may furthermore comprise a lubrication mechanism. The lubrication mechanism is for keeping the gear teeth on the first and second gear coupling parts 19, 21 and the gear teeth on the sleeve 22 lubricated. Fig. 6 illustrates how lubrication fluid, e.g. oil, runs through the planetary gear transmission unit 20 (bolt arrows). Lubrication fluid comes from the planet shaft 13 and flows through a channel 29 in the second gear coupling part 21 and is then spread. In that way, on the one hand the lubrication fluid goes in the direction (indicated by arrow 30) of gears at the generator side (G) and, on the other hand, goes in a direction (indicated by arrow 31) of the sleeve 22. Because of the latter, an oil sump 32 is formed in the sleeve 22. Eventually, the lubrication fluid ends up in the planetary gear transmission unit 20 (indicated by arrow 33).

Fig. 7 illustrates an example of how the gear coupling 18 according to the first embodiment of the invention can be mounted into a planetary gear transmission unit 20. It has to be understood that the procedure described here below is only an example and is not intended to limit the invention in any way. Any other suitable way to mount the gear coupling 18 according to the presently discussed embodiment into the planetary gear transmission unit 20 is intended to be within the scope of the present invention. First, the parts indicated with A, i.e. the first gear coupling part 19, the mounting flange 25, the circlips 28 and bolts 26 are pre-assembled. Similarly, the parts indicated with B, i.e. the second gear coupling part 21 and bolts 24 are also pre-assembled. The pre-assembled part B is then fixedly mounted onto the end face 100 of the planet shaft 13. Hereby, the pre-assembled part B can be easily passed through the holes 103 provided in the planet carrier 14.

After that, the sleeve 22 is slid over the mounted first gear coupling part 19 again by passing the sleeve 22 through the holes 103.

In a last step, the pre-assembled part A is introduced in the sleeve 22 by sliding the second gear coupling part 21 in it in the axial direction, after which the mounting flange 25 is connected fixedly to the planet carrier 14 by screwing bolts 108 into threaded holes 107 on the flange 109.

According to a second embodiment of the invention discussed in detail hereafter, the planet shaft locking mechanism may comprise a so-called double pin coupling.

Fig. 8 shows a planetary gear transmission unit 20 comprising a double pin coupling 18 according to the second embodiment. Similar as described for the first embodiment, the planetary gear transmission 20 unit comprises a housing 11 in which a plurality of planet gears 12, planet shafts 13 and a planet carrier 14 are located. The planetary gear transmission unit 20 furthermore comprises a ring gear 15 and a sun gear 16. Each planet gear 12 is rotatably supported on the planet shafts 13 by means of planet gear bearings 17. According to the present invention, the planet gear bearings 17 may, for example, be taper roller bearings.

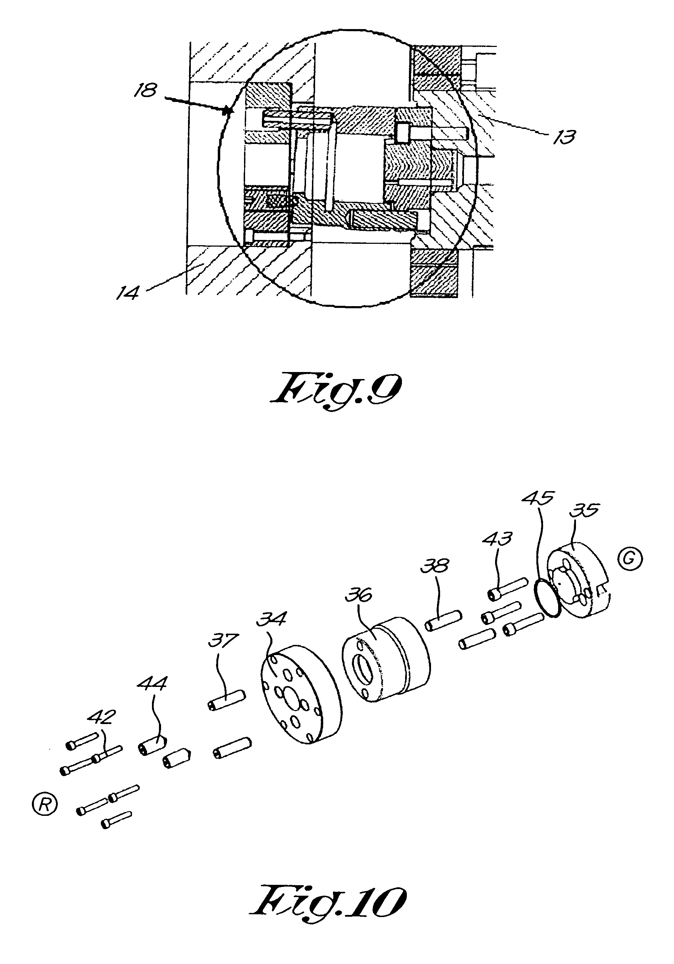

According to the present embodiment the planetary gear transmission unit 20 furthermore comprises a planet shaft locking mechanism 18 in the form of a double pin coupling, the locking mechanism preventing the rotation of a planet shaft 13 with respect to the planet carrier 14. The locking mechanism 18 in the form of a double pin coupling is provided in between the planet shaft 13 and the planet carrier 14 (see Fig. 3). In particular, the locking mechanism 18 is axially located between the aforementioned remaining part of the planet carrier 14 and an axial end face of the planet shaft 13. (see Fig. 9).

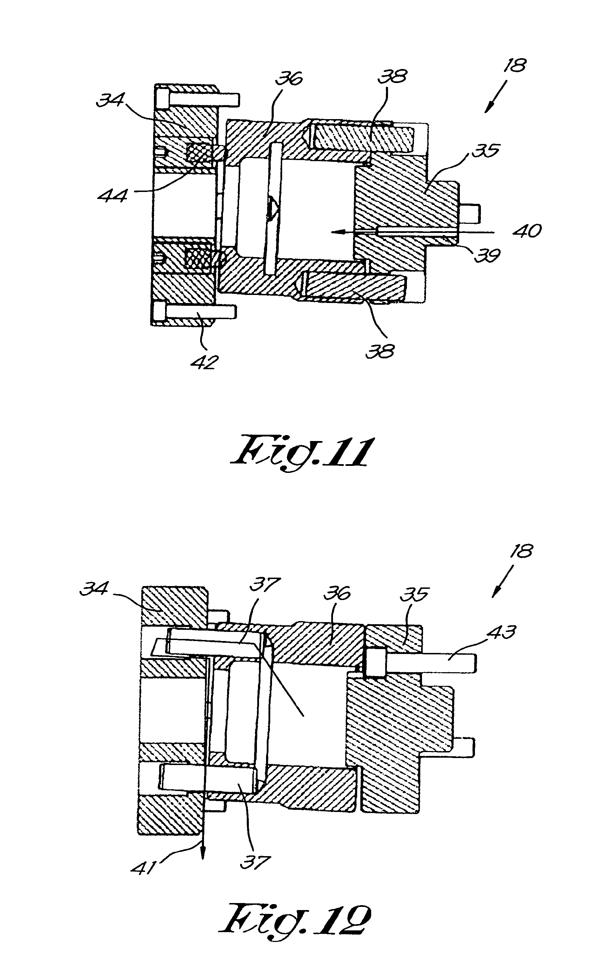

The double pin coupling 18 according to the second embodiment is schematically illustrated in Fig. 10 to Fig. 12. Fig. 10 illustrates the different parts of the double pin coupling 18 separately. Fig. 11 and Fig. 12 both show the double pin coupling 18, but the figures are rotated over 90° with respect to each other around the planet shaft axis so as to be able to visualize all different parts of the double pin coupling 18 according to the second embodiment of the invention. The double pin coupling 18 may, according to embodiments of the invention, be formed out of three parts, a first connecting part 34 for connecting the double pin coupling 18 to the plant carrier 14, a second connecting part 35 for connecting the double pin coupling 18 to the planet shaft 13 and an intermediate part 36 in between the first and second connecting part 34, 35.

The first connecting part 34 is interacting with the intermediate part 36 by means of hollow pins 37 (see Fig. 12) for preventing a rotation between the first connecting part 34 and the intermediate part 36. The second connecting part 35 is interacting with the intermediate part 36 by means of pins 38 for preventing a rotation between the second connecting part 35 and the intermediate part 36 (see Fig. 11).

Similar as described in the first embodiment, the intermediate part 36 is just for preventing a rotation between the first connecting part 34 and the second connecting part 35.

Hereby, the pins 38 are provided with their one end slidably in the axial direction in holes in the intermediate part 34 and with their other end slidably in the axial direction in holes in the second connecting part 35.

Similarly, the pins 37 are provided with their one end slidably in the axial direction in holes in the intermediate part 34 and with their other end slidably in the axial direction in holes in the first connecting part 34.

The double pin coupling 18 furthermore comprises a lubrication mechanism (illustrated by dark arrows in Fig. 11 and Fig. 12). Lubrication fluid enters the double pin coupling 18 at the location of the planet shaft 13 through a channel 39 in the second connecting part 35 (indicated by arrow 40 in Fig. 11). The lubrication fluid then flows through the intermediate part 36 towards the hollow pin 37 that connects the first connecting part 34 with the intermediate part 36. Arrow 41 in Fig. 12 illustrates how the lubrication fluid then leaves the double pin coupling 18 and flows into the gear unit 20.

According to the second embodiment of the invention the first connecting part 34 is at one side, also referred to as rotor side (R), connected to the planet carrier 14 by means of bolts 42. At the other side, also referred to as generator side (G) the second connecting part 35 is connected to the end face of the planet shaft 13 by means of bolts 43.

The double pin coupling 18 may furthermore comprise a spring 44 in the first connecting part 34. This spring 44 is for preventing movement of the intermediate part 36 between the first connecting part 34 and the second connecting part 35 during operation of the planetary gear transmission unit 20.

Furthermore, the double pin coupling 18 may comprise a seal 45 in between the second connecting part 35 and the intermediate part 36.

Hereinafter, an example of how the double pin coupling 18 according to the second embodiment of the invention can be mounted into a planetary gear transmission unit 20 will be described. It has to be understood that this example is only for the ease of explanation and is not intended to limit the invention in any way. Any other suitable way to mount the double pin coupling 18 according to the second embodiment into the planetary gear transmission unit 20 is intended to be within the scope of the present invention. First, the second connecting part 35 may be coupled to the planet shaft 13 by screwing bolts 43 into threaded holes in said shaft 13. Next, a seal 45 may be provided to a side of the intermediate part 36 which has to be connected to the second connecting part 35. After providing the seal 45 the intermediate part 36 may be pushed against the second connecting part 35 such that the seal 45 is in between the intermediate part 36 and the second connecting part 35. Hereby the pins 38 are introduced in corresponding holes in the intermediate part 36 and the second connecting part 35, so that a rotation of the second connecting part 35 with respect to the intermediate part 36 is possible. In a last step, the pins 37 and springs 44 may be introduced by axially sliding them into holes in the intermediate part 36, after which the first connecting part 34 is slid in the axial direction over said pins 37 and springs 44 and is connected to the planet carrier 14 by screwing bolts 42 into threaded holes in said planet carrier 14.

Hereby, the pins 37 are with their one end in the holes in the intermediate part 36 and with their other end in the first connecting part 34 for preventing a rotation of the intermediate part 36 with respect to the first connecting part 34.

Axial location of the intermediate part 36 with regard to the first and second connecting parts 34 and 35 is obtained by positioning it in between the planet shaft end face 100 and the remaining part of the planet carrier 14.

It is clear that the locking mechanism 18 in accordance with the second embodiment of a planetary transmission gear unit 20 according to the invention, prevents rotation of the first connecting part 34 and the second connecting part 35 with respect to one another, while small movements in other modes are still possible.

The invention may, for example, be interesting for applications whereby the planetary gear transmission unit 20 is provided with a bogie plate held by studs to a driving part of the planet carrier 14 and wherein the planet shafts 13 are mounted on the bogie plate with a high degree of freedom, for example by means of a ball joint or the like.

According to particular embodiments, the planet shafts 13 may extend at both sides of the bogie plate, each side of the planet shaft 13 supporting in a rotatable manner a planet gear 12.

The embodiments described above are not intended to limit the invention in any way. According to still further embodiments according to the present invention, the planet shaft locking mechanism 18 may, as already described earlier, also comprise any other, non-switchable coupling such as e.g. but not limited to a cross slot coupling, a jaw coupling or a metal disc coupling.

## Claims

1. A planetary gear transmission unit (20) in which planet gears (12) on a planet carrier (14) are mounted between a sun gear (16) and a ring gear (15) for mutual interaction, wherein the planet carrier (14) is provided with planet shafts (13) distributed uniformly around the planet carrier's axis, each planet shaft (13) supporting in a rotatable manner a pair of planet gears (12) by means of planet bearings (17), **characterized in that** the planetary gear transmission unit (20) furthermore comprises a planet shaft locking mechanism (18) between at least one planet shaft (13) and the planet carrier (14) for preventing said at least one planet shaft (13) from rotating around its own axis.

2. A planetary gear transmission unit (20) according to claim 1, **characterised in that** the planet shaft locking mechanism (18) comprises a gear coupling.

3. A planetary gear transmission unit (20) according to claim 2, **characterised in that** the gear coupling (18) comprises:
- a first and second gear coupling part (19, 21), the first gear coupling part (19) is intended for being connected to the planet carrier (14) and the second gear coupling part (21) is intended for being connected to the planet shaft (13),
- an intermediate part (22) for connecting the first gear coupling part (19) to the second gear coupling part (21), and
- a mounting flange (25) attached to the first gear coupling part (19).

4. A planetary gear transmission unit (20) according to claim 3, **characterised in that** the first and second gear coupling part (19, 21), have external gearing and the intermediate part is a sleeve (22) having complementary internal gearing, the sleeve (22) being slid over the first and second gear coupling parts (19, 21).

5. A planetary gear transmission unit (20) according to claims 3 or 4, **characterised in that** the intermediate part (22) is positioned between the axial end face (100) of a planet shaft (13) and the planet carrier (14) and has a length (L') corresponding to a distance (L") between said planet shaft end face (100) and the planet carrier (14).

6. A planetary gear transmission unit (20) according to any one of claims 3 to 5, **characterised in that** the intermediate part (22) is in slidable connection with the other coupling parts (19,21).

7. A planetary gear transmission unit (20) according to any of claims 3 to 6, wherein the gear coupling (18) furthermore comprises a fail safe mechanism (27).

8. A planetary gear transmission unit (20) according to any of claims 3 to 7, wherein the gear coupling (18) furthermore comprises a lubrication mechanism.

9. A planetary gear transmission unit (20) according to claim 1, wherein the planet shaft locking mechanism (18) comprises a double pin coupling.

10. A planetary gear transmission unit (20) according to claim 9, wherein the double pin coupling (18) comprises a first connecting part (34) for being connected to the planet carrier (14), a second connecting part (35) for being connected to the planet shaft (13) and an intermediate part (36) in between the first and second connecting part (34, 35).

11. A planetary gear transmission unit (20) according to claim 10, wherein the double pin coupling (18) furthermore comprises a hollow pin (37) for preventing a rotation between the intermediate part (36) and the first connecting part (34).

12. A planetary gear transmission unit (20) according to claim 10 or 11, wherein the double pin coupling (18) furthermore comprises a spring (44) in the first connecting part (34).

13. A planetary gear transmission unit (20) according to any of claims 10 to 12, wherein the double pin coupling (18) furthermore comprises a lubrication mechanism.

14. A gearbox comprising a planetary gear transmission unit (20) according to any of the previous claims.

15. A wind turbine comprising a gearbox according to claim 14.
